# DEMANDE DE BREVET EUROPEEN

(11) **EP 0 977 449 A1**
(43) Date de publication de la demande: **02.02.2000**
(21) Numéro de dépôt: 99401879.4
(22) Date de dépôt: 23.07.1999
(51) Int. Cl.: H04Q 7/32

(54) **Procédé antivol pour téléphone mobile pour réseau cellulaire et téléphone mobile équipé d'une protection antivol**

(30) Priorité: 31.07.1998 FR 9809856
(71) Demandeur: SAGEM SA, 75116 Paris (FR)
(72) Inventeur: Alos, Rafael, 95520 Osny (FR)
(74) Mandataire: Bloch, Gérard

(57) **Abrégé**

Selon le procédé antivol, appliqué à un téléphone mobile pour réseau cellulaire,
- avant d'attribuer au téléphone un numéro d'identité définitif (12),
- on attribue au téléphone un numéro d'identité provisoire (11),
- tant que le numéro d'identité définitif (12) n'a pas été attribué, on compte (15) la durée cumulée de fonctionnement avec une carte SIM d'abonné, et
   - quand la durée cumulée (15) atteint une durée limite (14), on inhibe (16) le fonctionnement du téléphone.

## Description

Un téléphone mobile, pour réseau cellulaire du type GSM, présente la particularité de permettre à son détenteur, s'il possède également un module d'identification (carte SIM), d'accéder au réseau par l'intermédiaire de l'opérateur ayant fourni la carte SIM. Ainsi, tout détenteur d'une carte SIM peut l'introduire dans un téléphone mobile et accéder au réseau. Même le téléphone mobile d'un autre, emprunté, trouvé, voire volé.

Tout le monde sait donc qu'il faut faire attention à son téléphone mobile qui peut servir à d'autres.

La demanderesse a eu l'idée de vouloir éviter le vol de ces terminaux téléphoniques sur les lignes de fabrication, voire même au-delà, dans les chaînes de distribution ou à nouveau en usine, dans les services après-vente.

D'emblée, on notera que, par terminal téléphonique, il faut entendre aussi bien l'appareil terminé, dans son boîtier, que la seule carte électronique opérationnelle du terminal.

Tous les téléphones mobiles sont pourvus d'un numéro de série électronique, dit numéro d'identité internationale d'équipement mobile (IMEI), qu'on saisit au banc de paramétrage ou en direct sur le clavier du téléphone, après connexion d'une clé physique de programmation du numéro IMEI.

La présente invention concerne d'abord un procédé antivol pour téléphone mobile pour réseau cellulaire, dans lequel,
- avant d'attribuer au téléphone un numéro d'identité définitif,
- on attribue au téléphone un numéro d'identité provisoire
- tant que le numéro d'identité définitif n'a pas été attribué, on compte la durée cumulée de fonctionnement avec une carte SIM d'abonné,
- quand la durée cumulée atteint une durée limite, ou inhibe le fonctionnement du téléphone.

Ainsi, tant qu'on n'a pas saisi le numéro d'identité définitif, le durée du fonctionnement est limitée. Et ce numéro définitif peut être saisi au poste d'emballage du fabricant ou même ultérieurement, chez le distributeur, par exemple à la caisse, au moment de la transaction. Si la durée limite est atteinte, on présume que le téléphone a été volé. Sinon, la programmation du numéro d'identité définitif désactive la protection antivol.

On remarquera que la protection antivol n'est finalement activée que si on utilise le téléphone avec une carte SIM d'abonné, donc a priori pour une communication téléphonique sur le réseau. Les étapes de pure fabrication, de réglage, de test ou de dépannage, qui s'effectuent avec une carte SIM de test ou sans carte SIM, ne sont donc pas affectées par la protection de l'invention.

On remarquera encore que le procédé de l'invention ne perturbe aucunement de façon tangible les outils, méthodes et habitudes utilisés sur les lignes de fabrication.

Avantageusement, on décompte, de la durée limite, les tests sur réseau réel avec carte SIM normale.

De préférence, au-delà de la durée limite de fonctionnement sans attribution du numéro d'identification définitif, on inhibe le fonctionnement du téléphone avec une carte SIM de test.

De préférence encore, à chaque mise hors tension, on mémorise la durée cumulée en mémoire EEPROM, pour la sauvegarder.

On peut la mémoriser dans une zone inacessible aux moyens usuels de maintenance.

L'invention concerne également un téléphone mobile pour réseau cellulaire, équipé de moyens de protection antivol comprenant :
- des moyens de comptage de temps contrôlant
- des moyens de comparaison de seuil qui commandent
- des moyens d'inhibition du fonctionnement du téléphone qui commandent un clavier (3) du téléphone,
- des moyens (21) commandés par programmation d'un numéro d'identité IMEI et agencés pour court-circuiter les moyens de comptage de temps.

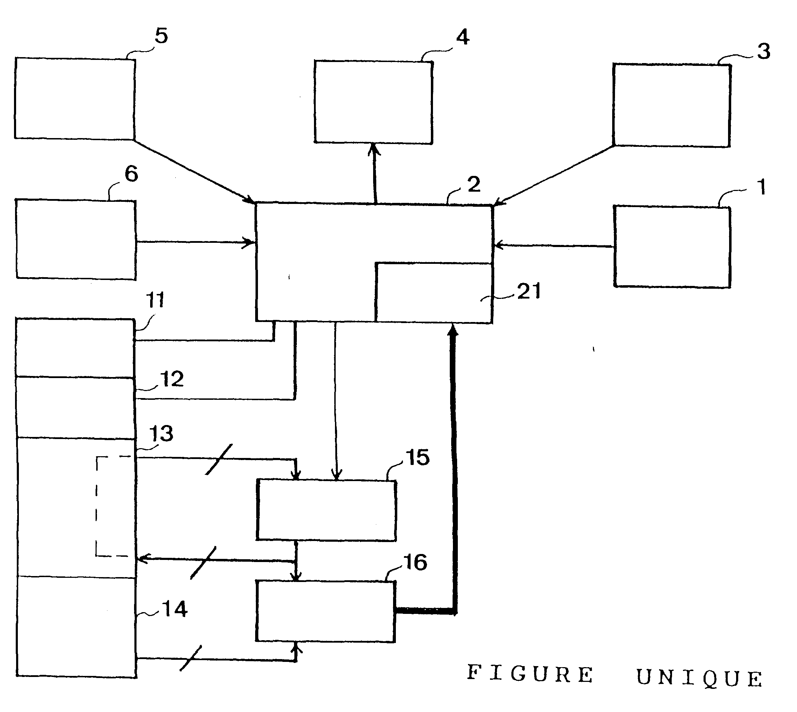

L'invention sera mieux comprise à l'aide de la description suivante d'un mode préféré de mise en oeuvre du procédé de l'invention, en référence à la figure unique annexée qui représente, par blocs fonctionnels, un téléphone mobile pour la mise en oeuvre du procédé de l'invention.

Le téléphone mobile pour réseau cellulaire, pour la mise en oeuvre du procédé de l'invention, comporte une base de temps 1 commandant le séquencement d'une unité centrale 2 à microprocesseur, scrutant les touches d'un clavier de commande 3 et commandant un écran 4. L'unité centrale 2 est aussi reliée à un lecteur 5 de carte à puce SIM et à un circuit d'entrée 6, de réception d'une clé de programmation de numéro IMEI définitif.

Un ensemble de calcul de temps cumulé de fonctionnement du téléphone en présence d'une carte SIM comporte un compteur 15, dont l'avance est commandée par l'unité centrale 2, qui lui fournit un signal d'horloge, et dont les sorties sont reliées aux premières entrées d'un comparateur 16 recevant, sur ses secondes entrées, une valeur fixe de durée limite de fonctionnement représentant ici dix minutes de fonctionnement du compteur 15. Cette valeur est mémorisée dans une zone 14 d'une mémoire sauvegardée, telle que mémoire morte ou mémoire vive à sauvegardée. En cas de coupure de l'alimentation du téléphone, le contenu du compteur 15, représentant la durée d'utilisation cumulée, est de même sauvegardé en mémoire inscriptible 13 sur la carte portant les composants, comme une mémoire EEPROM, pour être rechargé à la mise sous tension suivante. Les deux liaisons, avec un rebouclage en ligne pointillée, illustrant ces transferts ne sont ici qu'à titre illustratif, car ceux-ci s'effectuent en fait à travers l'unité centrale 2, qui détecte toute baisse d'alimentation et toute réapparition de celle-ci et fournit alors les commandes de lecture/écriture voulues et rythme le transfert des données.

La sortie du comparateur 16 est reliée à un circuit d'entrée 21 de l'unité centrale 2 pour, en passant à l'état actif, y transmettre un signal d'alarme, ou d'inhibition, lorsque le total de comptage du compteur 15 atteint la valeur prédéterminée en mémoire 14.

Il est aussi prévu, dans un même ensemble mémoire 11-14, deux zones de mémoire sauvegardée EEPROM, 11 et 12, pour y mémoriser respectivement un numéro IMEI temporaire et un numéro IMEI définitif.

En fabrication de la carte portant les composants ci-dessus, le procédé de l'invention va permettre de la tester pendant le temps suffisant, puis va interdire toute utilisation de celle-ci en exploitation, avec une carte SIM.

Pour cela, avant d'attribuer au téléphone le numéro d'identité définitif IMEI, qui sera rangé en mémoire 12, on lui attribue un numéro IMEI d'identité provisoire, qu'on range en mémoire 11, et, tant que le numéro d'identité IMEI définitif n'a pas été attribué, l'unité centrale 2 fait compter au compteur 15 la durée cumulée de fonctionnement avec une carte SIM d'abonné, pour que, quand la durée cumulée atteint la durée limite en mémoire 14, le fonctionnement du téléphone soit inhibé.

A cet effet, l'unité centrale 2 effectue d'abord la saisie, depuis le clavier 3 par exemple, du numéro IMEI provisoire pour le ranger en mémoire 11. Ce numéro a ici un format différent d'un numéro IMEI définitif, ce qui permet à l'unité centrale 2 de le différencier du numéro IMEI définitif. On notera cependant que, comme la seule façon prévue ici pour écrire le numéro IMEI définitif en mémoire 12 est un accès par le circuit 6, qui nécessite une clé physique à accès restreint, le seul fait de pouvoir accéder à l'unité centrale 2 depuis le circuit 6 indique que le numéro IMEI provenant par cette voie protégée est celui qui est définitif. Il est donc rangé en mémoire 12 et la différence de formats ci-dessus n'est alors pas nécessaire. Elle le redeviendrait si l'on prévoyait de saisir aussi le numéro IMEI provisoire à travers le circuit 6.

La mémoire 12 étant vide, l'unité centrale 2 détecte donc que le téléphone doit fonctionner en mode protégé, c'est-à-dire avec le compteur 15 qui avance lorsqu'une carte SIM est présente dans le lecteur 5. Afin de permettre les tests de mise au point, le compteur 15 n'avance pas en l'absence de carte SIM d'abonné.

Plus précisément, dans cet exemple, le compteur 15 avance en présence d'une carte SIM normale c'est-à-dire, si l'on raisonne par rapport à la durée limite de 10 minutes, cela revient à décompter de celle-ci les tests sur réseau réel. Le compteur 15 pourrait tout aussi bien être un décompteur chargé initialement à la valeur de la durée limite. Il peut en outre être prévu d'inhiber aussi le fonctionnement du téléphone avec toute carte SIM de test, en l'absence du numéro IMEI définitif, et lorsque la durée cumulée de fonctionnement avec carte SIM, de test ou normale, a été atteinte.

L'inhibition est gérée par l'unité centrale 2 commandée par la sortie du comparateur 16, lui-même contrôlé par le compteur 15. Cette inhibition a un effet d'hystérésis pour mémoriser l'état de sortie du comparateur 16, par exemple par blocage du compteur 15, évitant ainsi toute retombée à zéro de ce dernier, qui ferait changer d'état le comparateur 16.

L'inhibition a pour effet, principal, vis-à-vis de l'utilisateur, de rendre non fonctionnel le téléphone, ici en inhibant le clavier 3, c'est-à-dire en n'effectuant pas la scrutation cyclique de ses touches. On conçoit qu'un blocage logique des circuits radio aurait le même effet final. L'unité centrale 2 affiche alors un message indiquant que le téléphone est verrouillé.

Pour mémoriser le numéro IMEI définitif, la clé d'accès à l'unité centrale 2 est constituée d'un terminal outil, ici un téléphone mobile, à accès contrôlé, comportant un logiciel de communication, qui se raccorde par un cordon à l'unité centrale 2 par le circuit 6 par un protocole spécifique et secret et qui transfère à celle-ci le numéro IMEI définitif, qui va être rangé en mémoire 12.

La détection, par l'unité centrale 2, de la présence d'un numéro IMEI en mémoire 12, donc définitif, a pour effet de supprimer l'effet d'inhibition de la sortie active du comparateur 16, ou d'empêcher cette activation à l'avenir.

A chaque mise sous tension, l'unité centrale 2 teste la présence du numéro IMEI en mémoire 12 et la mémorise sous la forme d'un bit dans le circuit 21 comportant une porte de lecture du comparateur 16, porte verrouillable par la sortie de la mémoire à un bit évoquée ci-dessus. Il y a ainsi refus de prise en compte de l'état de sortie du comparateur 16 ou, en d'autres termes, le compteur 15 est "court-circuité" quant à ses effets. En variante ou en complément, l'avance du compteur 15 peut être alors bloquée, par absence de signaux d'horloge, ou par forçage à zéro de celui-ci.

## Revendications

1. Procédé antivol pour téléphone mobile pour réseau cellulaire, dans lequel,
- avant d'attribuer au téléphone un numéro d'identité définitif (12),
- on attribue au téléphone un numéro d'identité provisoire (11),
- tant que le numéro d'identité définitif (12) n'a pas été attribué, on compte (15) la durée cumulée de fonctionnement avec une carte SIM d'abonné,
- quand la durée cumulée (15) atteint une durée limite (14), on inhibe (16) le fonctionnement du téléphone.

2. Procédé selon la revendication 1, dans lequel on décompte, de la durée limite (14), les tests sur réseau réel avec carte SIM normale.

3. Procédé selon l'une des revendications 1 et 2, dans lequel, au-delà de la durée limite de fonctionnement (14) sans attribution du numéro d'identification définitif (12), on inhibe le fonctionnement du téléphone avec une carte SIM de test.

4. Procédé selon l'une des revendications 1 à 3, dans lequel on mémorise la durée cumulée en mémoire EEPROM (13), pour la sauvegarder.

5. Téléphone mobile pour réseau cellulaire, équipé de moyens de protection antivol comprenant :
- des moyens de comptage de temps (15) contrôlant
- des moyens de comparaison (16) de seuil (14) qui commandent
- des moyens (2) d'inhibition du fonctionnement du téléphone qui commandent un clavier (3) du téléphone,
- des moyens (21) commandés par programmation d'un numéro d'identité IMEI et agencés pour court-circuiter les moyens de comptage de temps (15).
